## Europäisches Patentamt
## European Patent Office
## Office européen des brevets

(11) Veröffentlichungsnummer: **0 077 750**
**B1**

(12) **EUROPÄISCHE PATENTSCHRIFT**

(45) Veröffentlichungstag der Patentschrift:
**03.06.87**

(51) Int. Cl.⁴: **F 27 B 14/00,** C 21 C 5/52,
H 05 B 6/20

(21) Anmeldenummer: **82710050.4**

(22) Anmeldetag: **11.10.82**

(54) **Rinnenofen.**

(30) Priorität: **20.10.81 SE 8106184**

(43) Veröffentlichungstag der Anmeldung:
**27.04.83 Patentblatt 83/17**

(45) Bekanntmachung des Hinweises auf die Patenterteilung:
**03.06.87 Patentblatt 87/23**

(84) Benannte Vertragsstaaten:
**CH DE GB IT LI**

(56) Entgegenhaltungen:
**CH - A - 216 537
CH - A - 258 438
CH - A - 294 879
DE - A - 2 242 927
DE - B - 1 236 732
DE - B - 1 458 917
GB - A - 935 074
US - A - 3 618 917**

**ELEKTROWÄRME INTERNATIONAL, Band 31, Nr. B6,
Dezember 1973, Seiten B270-B278, Essen, DE. D.
SCHLUCKEBIER: "Induktoren zum Schmelzen von
Schwermetall, insbesondere mit höherer Leistung"**

(73) Patentinhaber: **ASEA AB, S-721 83 Västeras (SE)**

(72) Erfinder: **Tallbäck, Göte, Dipl.-Ing., Bandygatan 12,
S-722 24 Västeras (SE)**

(74) Vertreter: **Boecker, Joachim, Dr.-Ing.,
Rathenauplatz 2-8, D-6000 Frankfurt a.M. 1 (DE)**

## Beschreibung

Die Erfindung betrifft ein Verfahren zum Herstellen eines Rinnenofens gemäss dem Oberbegriff des Anspruches 1.

Ein Problem bei solchen Öfen besteht in der Verstopfung der Rinnen, die beispielsweise dadurch leicht auftreten kann, dass sich Oxyde der Metalle, die erwärmt oder geschmolzen werden sollen, an den Rinnenwänden ablagern. Dies hat zur Folge, dass die Rinnen oft gereinigt werden müssen, wobei es sich um eine schmutzige und oftmals lärmende Arbeit handelt und wodurch die Lebensdauer der Induktoren verkürzt wird. Ausserdem wird hierdurch die Produktionskapazität herabgesetzt.

Man hat versucht, dieses Problem durch Einführung von Inertgas in die Rinnen zu beseitigen. Dies verteuert jedoch den Ofen und kann auch zu einer Rinnenerosion führen.

Rinnenöfen mit offenen Rinnen sind bekannt. Dies gilt auch für Rinnenöfen mit grossen Abmessungen der Rinne, beispielsweise Rinnenöfen des Typs Tagliaferri. Ein Nachteil dieser Öfen ist jedoch ihre begrenzte Leistung und die in diesem Zusammenhang verwendeten kleinen Ofenherde (Wannen). Derartige Öfen sind u.a. in «Stöperitidende 1957, Nr. 10» beschrieben. Zu den Hindernissen, die dem Bau von Rinnenöfen für grössere Leistungen, insbesondere dem Bau von Aluminium-, Messing- oder Kupferöfen, im Wege stehen, gehören die Verschlechterung des Leistungsfaktors, die ungleichmässige Verteilung der Stromdichte über den Rinnenquerschnitt und der Pinch-Effekt, der durch elektromagnetische Volumenkräfte verursacht wird, die auf das Metall in der Rinne wirken und bestrebt sind, die Schmelze in den Rinnen abzuschnüren. Ein Induktor kann nicht in der Nähe der Pinch-Effekt-Grenze benutzt werden, da der speisende Transformator dadurch überlastet wird. Der Pinch-Effekt in Messing-Induktoren, um nur ein Beispiel zu nennen, ist temperaturabhängig, und bei Rinneninduktoren zum Schmelzen von Aluminium kann der Pinch-Effekt bei einem zu grossen Gasinjektionsfluss auftreten.

Aus der DE-AS 1 458 917 ist ein Rinnenofen bekannt, der bei der Stahlherstellung als Teil eines Sauerstoffaufblaskonverters verwendet wird und die Funktion einer Zusatzheizung hoher spezifischer Leistung hat. In der Druckschrift wird ausgeführt, dass das in Bezug auf die Spulenachse radiale Mass der Rinne («Rinnenhöhe» im Sinne dieser Beschreibung) über dem 1,2-fachen der Eindringtiefe des in die Rinne induzierten Stroms beträgt, während das in Bezug auf die Spulenachse achsiale Mass der Rinne grösser als das zweifache des genannten radialen Masses sein soll. Welche Werte nach oben für diese Masse in Betracht kommen, ist der DE-AS 1 458 917 nicht zu entnehmen.

Über die im Stand der Technik vorkommenden oberen Grenzmasse der Rinnen sind in der Druckschrift «Elektrowärme international» 1973, Seite B270–B278 Angaben zu finden. So werden auf Seite 274 für das radiale Mass der Rinne die Werte von (1,3 bis 3) × Eindringtiefe genannt und für das achsiale Mass Werte von (1,8 bis 1,3) × dem radialen Mass. Dabei gelten die grösseren Werte des letztgenannten Faktors für die kleineren Werte des radialen Masses. Es wird auf Seite 273 der Druckschrift auch ausgeführt, dass eine quadratische Rinne günstigere Werte aufweist, und dass bei der Vergrösserung der Rinne der Rinnenquerschnitt sich stärker dem Quadrat annähern sollte. In der Druckschrift wird festgestellt, dass bei radialen Massen über zwei × Eindringtiefe eine erhöhte Pinsch-Gefahr nicht bestehe. Es wird ferner ausgeführt, dass ein geringes radiales Mass der Rinne wichtig sei, um durch Erhöhung des ohmschen Widerstandes eine Verbesserung des Leistungsfaktors zu erzielen.

Der Erfindung liegt die Aufgabe zugrunde einen Rinnenofen zu bauen, der eine erheblich grössere Leistung als die bekannten Rinnenöfen hat, ohne dass hierbei Schwierigkeiten durch den Pinsch-Effekt entstehen oder der Leistungsfaktor wirtschaftlich unvertretbar niedrige Werte annimmt.

Zur Lösung dieser Aufgabe wird ein Verfahren zum Herstellen eines Rinnenofens gemäss dem Oberbegriff des Anspruches 1 vorgeschlagen, welcher erfindungsgemäss die im kennzeichnenden Teil des Anspruches 1 genannten Merkmale hat.

Vorteilhafte Ausgestaltungen der Erfindung sind in den weiteren Ansprüchen genannt.

Die Eindringtiefe $\delta$ in die Schmelze ergibt sich aus folgender Gleichung:

$$\delta = \sqrt{\frac{2 \cdot \rho}{2\pi \cdot f \cdot \mu_r \cdot \mu_o}} \qquad (1)$$

wobei $\varsigma$ der spezifische Widerstand des geschmolzenen Metalls in Ohm $\cdot$ m, $\delta$ die Eindringtiefe in m, f die Frequenz in Hz, $\mu_r$ die relative Permeabilität für geschmolzenes Metall ($\mu_r = 1$ für z.B. Al, Cu, Messing) und $\mu_o = 4\pi \cdot 10^{-7}$ H/m die absolute Permeabilität ist.

Mit einem Rinnenofen nach der Erfindung erhält man die Möglichkeit, bedeutend grössere Einheiten zu verwenden und erheblich grössere Rinnenleistungen als bei den bekannten Rinnenöfen zu erzielen. Die Rinnen bleiben im wesentlichen verstopfungsfrei, es setzen sich also keine nennenswerten Al- oder Cu-Oxyde an den Rinnenwänden ab. Die Öfen können vom Einzel- oder Doppel-Rinnentyp sein und sind vorzugsweise zum Schmelzen von Aluminium, Kupfer oder Messing bestimmt.

Anhand der Figuren soll die Erfindung näher erläutert werden. Es zeigen

Fig. 1 ein Ausführungsbeispiel eines Einzelrinnenofens gemäss der Erfindung im Schnitt,

Fig. 2 Leistungsdichtekurven in einer Rinne,

Fig. 3 eine Einzelheit an einem Induktor für einen Rinnenofen gemäss der Erfindung,

Fig. 4 einen Querschnitt durch ein Ausführungsbeispiel des Induktors eines Rinnenofens gemäss der Erfindung,

Fig. 5 das Schaltbild für die Phasenkompensation eines Rinnenofens.

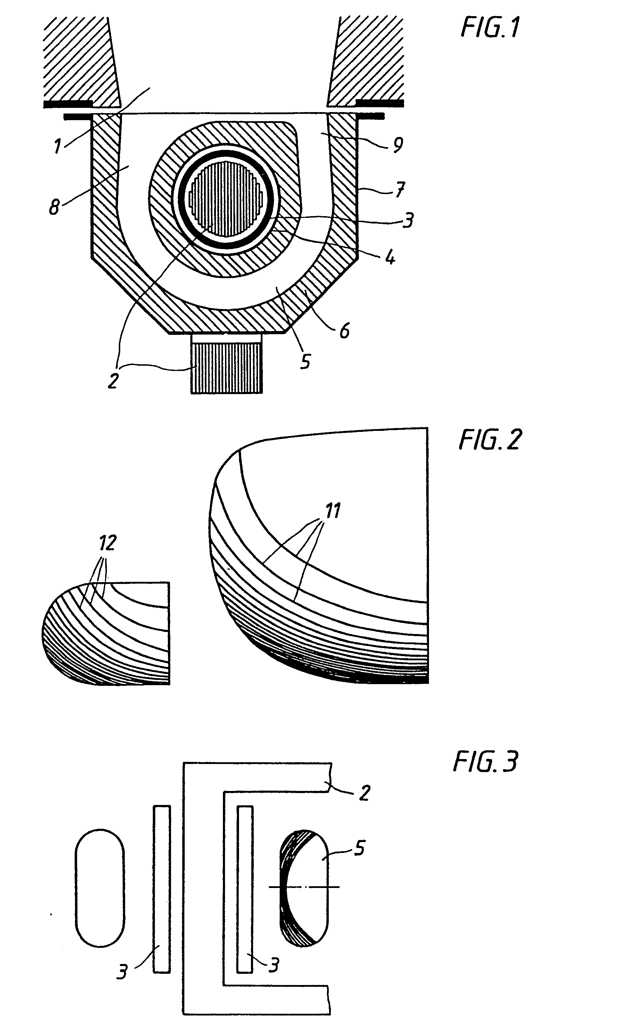

Figur 1 zeigt einen Einzelrinneninduktor, der an einen Ofenherd 1 angeschlossen ist. Der Induktor besteht aus einem Eisenkern 2, einer Spule 3 mit Kühlfutter 4, einer geschlossenen Rinne 5 mit Auskleidung 6 sowie einem Gehäuse oder Mantel 7.

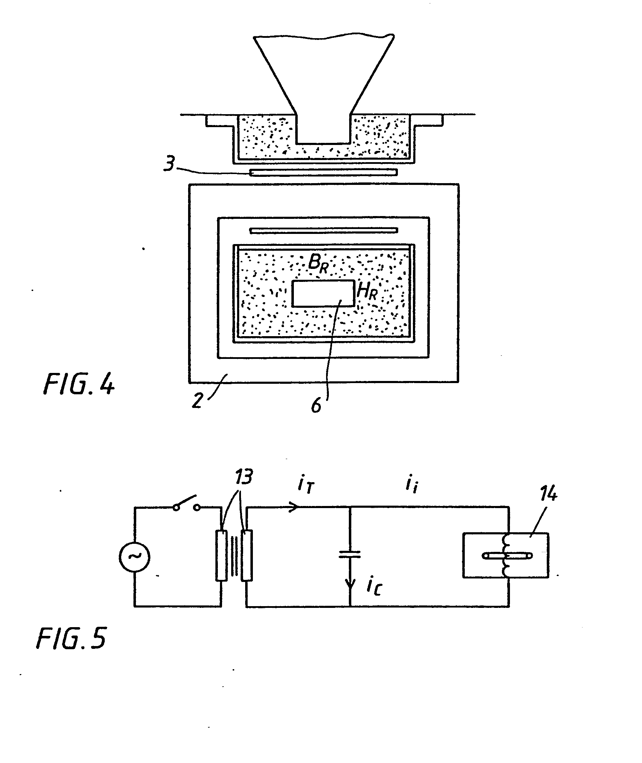

Figur 4 zeigt einen Schnitt durch einen Induktor in einer Ebene senkrecht zur Zeichenebene in Figur 1, in der die Längsachse der Spule liegt. Die Höhe $H_R$ der Rinne 5 soll mindestens $4 \times \delta$ betragen, wobei $\delta$ die oben erläuterte Eindringtiefe ist. Die Rinnenbreite $B_R$ soll mindestens $6 \times \delta$ betragen.

Für geschmolzenes Aluminium gilt beispielsweise bei 750 °C, dass $\varsigma = 0,23 \cdot 10^{-6}$ Ohm $\cdot$ m ist, und mit f = 50 Hz erhält man

$$\delta = \sqrt{\frac{2 \cdot 0,23 \cdot 10^{-6}}{2\pi \cdot 50 \cdot 4\pi \cdot 10^{-7}}} = 0,0341 \text{ m},$$

somit ergibt sich:

$H_R \geq 4 \cdot \delta \geq 0,136$ m
$B_R \geq 0,205$ m.

Für Cu erhält man ungefähr dieselben Werte.

Eine Rinne mit den Abmessungen $H_R \geq 4\delta$ und $B_R \geq 6\delta$ kann eine hohe Leistung pro Längeneinheit der Rinne $(\frac{dP}{dl})$ im Verhältnis zum elektromagnetischen Druck $p_{em}$ in der Rinne haben.

Näherungsweise gilt, wobei $I_R$ die Rinnenstromstärke ist:

$$\frac{dP}{dl} = \frac{\rho \cdot I_R^2}{\delta \ (B_R + 2 \cdot \delta)} \qquad (2)$$

(bei breiten Rinnen)

und

$$p_{em} = \frac{\mu_0 \cdot I_R^2}{2 \cdot (B_R + 2 \cdot \delta)^2} \qquad (3)$$

und

$$\frac{dP/dl}{p_{em}} = \frac{2 \cdot \rho}{\mu_0} (\frac{B_R}{\delta} + 2) \qquad (4)$$

Eine Rinne mit den Eigenschaften gemäss dem Hauptanspruch, die eine hohe Leistung pro Längeneinheit, dP/dl, ergeben, kann verwendet werden, ohne dass ein Pinch-Effekt auftritt.

Die elektrische Speisung eines Rinneninduktors erfolgt normalerweise mit Phasenkompensation (siehe Figur 5). Bei normalem Betrieb ist $i_T < < i_i$ und $i_c \approx i_i$, wobei $i_c$ der Strom durch eine parallel zum Induktor 14 liegende Kapazität und $i_T$ der Sekundärstrom des Transformators 13 ist. $i_i$ ist der durch den Rinneninduktor 14 fliessende Strom.

Bei Auftreten des Pinch-Effektes wird $i_i \approx 0$, was dazu führt, dass $i_T \approx i_c$ wird. Man erhält dann einen grösseren Transformatorstrom als normalerweise, so dass der Überlastungsschutz des Transformators ansprechen und die Energiezufuhr unterbrechen kann. Dies ist einer der Hauptgründe dafür, dass man einen Induktor nicht nahe der Pinch-Effekt-Grenze betreiben will.

Bei Auftreten des Pinch-Effektes treten ausserdem grosse mechanische Beanspruchungen der Induktorauskleidung auf (was mit einer Kavitation verglichen werden kann, die Stahl in Propellern aushöhlen kann). Ausserdem werden der Kern und die Spule einer unnormalen Belastung ausgesetzt.

Aufgrund des Pinch-Effektes kann auch eine Überhitzung in der Rinne stattfinden.

Bei Auftreten des Pinch-Effektes gilt näherungsweise:

$$P_{em} = C_1(p_0 + \varsigma_0 \cdot g \cdot h - p_{VAP}),$$

wobei $p_0$ der Atmosphärendruck über der Schmelze, $\varsigma_0$ die Dichte des flüssigen Metalls, g = 9,81 m/s² die Erdbeschleunigung, h die Badtiefe, $p_{VAP}$ der Verdampfungsdruck der Schmelze und $C_1$ eine dimensionslose Konstante in der Grössenordnung Eins ist, die von der geometrischen Form der Rinne abhängt.

Mit einer Rinne nach dem Hauptanspruch erhält man einen niedrigen Temperaturunterschied zwischen Rinne und Wanne (Herd).

Im allgemeinen gilt, dass dieser Temperaturunterschied umgekehrt proportional zum Rinnenquerschnitt ist. Bei grossem Rinnenquerschnitt erhält man also einen niedrigen Temperaturunterschied zwischen Rinne und Wanne (Herd).

Die hohe Leistung pro Längeneinheit und der grosse Rinnenquerschnitt ergeben verstopfungsfreie Rinnen und schaffen die Möglichkeit, grosse Rinnenöfen anzuwenden. Im allgemeinen gilt, dass eine höhere Strömungsgeschwindigkeit des Metalls an der Rinnenwand eine geringere Verstopfungstendenz zur Folge hat. Eine hohe Geschwindigkeit erhält man durch eine hohe Rinnenleistung.

Asymmetrische Rinnen an Rinnenöfen sind an sich bekannt. Diese bekannte Idee kann mit dem im Hauptanspruch beschriebenen Erfindungsgedanken kombiniert werden. Figur 1 zeigt eine asymmetrische Rinne 6, bei der die eine Rinnenmündung 8 grösser als die andere 9 ist.

Diese Rinne verhält sich derart, dass eine gewisse Kraft versucht, die Schmelze aus der grossen Mündung 8 in die kleinere 9 zu treiben.

Eine solche Rinne verhindert das Entstehen von Strömungsstaupunkten in der Rinne. Dies trägt zu kleineren Temperaturunterschieden zwischen Rinne und Herd sowie zu einer geringeren Verstopfung beim Betrieb mit Aluminium bei.

Kurven mit derselben Volumenleistung, welche die Volumenleistung in der Rinne veranschaulichen (Äquivolumenleistungslinien 11 und 12) zeigt Figur 2 im rechten Teil für eine grosse Rinne und im linken Teil für eine kleine, konventionelle Rinne. Man sieht, dass bei der Erfindung die Leistungsdichte an der Innenseite der Rinne, zur Spule 3 hin, am grössten ist (siehe die Figuren 2 und 3). Der Rinnenwiderstand $R_{CH}$ beruht auf der Verteilung der Stromdichte in der Rinne. (Volumenleistung $p_v = \varsigma J^2$, wobei J die Stromdichte und $\varsigma$ der ohmsche Widerstand ist).

Bei niedriger Spannung an der Spule 3 ist der Rinnenstrom $I_R$ der Spannung proportional. Bei höheren Spannungen kann der Rinnenstrom sehr instabil werden und zwischen nahezu Null und hohen Werten schwanken. Dieses Instabilitätsphänomen wird durch den sog. Pinch-Effekt verursacht. Die elektromagnetische Volumenkraft wirkt auf das geschmolzene Metall in der Rinne und neigt dazu, deren Querschnitt einzuschnüren. Es ist aus Versuchen an Doppelrinneninduktoren für Aluminium bekannt, dass die Pinch-Effekt-Grenze mit zunehmender Badtiefe zunimmt. Wenn man die Badtiefe von 1m auf 2m erhöht, so erhöht sich die Pinch-Effekt-Grenze jedoch nicht um 100%, sondern diese Erhöhung liegt in der Grössenordnung von 10 bis 20%.

Der Pinch-Effekt bei Messinginduktoren ist temperaturabhängig (die Verdampfung von Zink verursacht den Pinch-Effekt). Der Pinch-Effekt tritt auch bei Rinnen für Aluminiumöfen mit Inertgaseinblasung auf, wenn der Gasfluss zu hoch ist. Im Hinblick auf diese Tatsachen betreffend den Pinch-Effekt ist es gerechtfertigt, den Pinch-Effekt als Kavitationsphänomen zu bezeichnen.

Der statische Druck $P_{STAT}$ in der Rinne ohne Rinnenstrom beträgt:

$$P_{STAT} = p_0 + \varsigma_0 \cdot g \cdot h; \qquad (5)$$

wobei $P_0$ der Atmosphärendruck, $\varsigma_0$ die Metalldichte, h die Badhöhe und g die Erdbeschleunigung ist.

Wenn in der Rinne elektrischer Strom fliesst, treten elektromagnetische Kräfte auf, welche die Schmelze in Bewegung setzen, und der Zusammenhang zwischen der Strömungsgeschwindigkeit v des Metalls und dem elektromagnetischen Druck $p_{em}$ ergibt sich aus:

$$p_{em} = C_1 \cdot \varsigma_0 \cdot v^2/2, \qquad (6)$$

wobei $C_1$ eine Konstante ist, die von der geometrischen Form der Rinne abhängig ist.

Der statische Druck $P_{STAT}$ wird dabei gesenkt, und man erhält

$$P_{STAT} = p_0 + \rho_0 \cdot g \cdot h - \rho_0 \cdot v^2/2 \qquad (7)$$

Wenn die Strömungsgeschwindigkeit des Metalls so gross ist, dass sich der statische Druck dem Verdampfungsdruck $P_{VAP}$ der Flüssigkeit nähert, beginnt eine Kavitation aufzutreten.

Gemäss dieser Theorie ist die Bedingung für das Auftreten des Pinch-Effektes also

$$\rho_0 \frac{v_{pinch}^2}{2} = p_0 + \rho_0 \cdot g \cdot h - p_{VAP} \qquad (8)$$

oder mit den Gleichungen (6) und (7) erhält man:

$$P_{em_{pinch}} = C_1 (p_0 + \rho_0 \cdot g \cdot h - p_{VAP}) \qquad (9)$$

Der elektromagnetische Druck $p_{em}$ beruht auf der Leistung der Rinne pro Längeneinheit (dP/dl) gemäss dem Verhältnis:

$$(dP/dl) = C_2 \cdot p_{em}, \qquad (10)$$

wobei $C_2$ eine Konstante ist, die von der geometrischen Form der Rinne und der Verteilung des elektromagnetischen Feldes in der Rinne abhängt. Mit den Gleichungen (9) und (10) erhält man:

$$(dP/dl)_{pinch} = C_1 C_2 (p_0 + \rho_0 \cdot g \cdot h - p_{VAP}) \qquad (11)$$

Die elektromagnetische Theorie zeigt, dass der Koeffizient $C_2$ mit zunehmenden Rinnenabmessungen grösser wird. Näherungsweise gilt, wenn $H_R > 2\delta$ und $B_R > 2\delta$, folgendes:

$$\left(\frac{dP}{dl}\right)_{pinch} = C_1 \frac{2\rho}{\mu_0} \left(\frac{B_R}{\delta} + 2\right) (p_0 + \rho_0 \cdot g \cdot h - p_{VAP}) \qquad (12)$$

Diese Theorie zeigt, dass die Pinch-Effekt-Grenze mit Vergrösserung der Rinnenabmessungen erhöht werden kann. Dadurch, dass die Rinne verstopfungsfrei ist, besteht für den Pinch-Effekt als Folge einer Verstopfung keine Gefahr. Man kann gemäss der Erfindung also Öfen mit grosser Kapazität ohne die bisher bekannten Schwierigkeiten bauen. Die Rinne kann im Längsschnitt abgerundet sein oder aus zwei Seitenrinnen und einer diese verbindenden Bodenrinne bestehen, wobei eventuell eine weiteren, zentrale Rinne vorhanden ist, die vom Herd zur Bodenrinne verläuft. Die Rinnenabmessungen beziehen sich auf den kleinsten Querschnitt.

Der Rinnenofen gemäss der Erfindung kann im Rahmen des offenbarten allgemeinen Erfindungsgedankens in vielfacher Weise variiert werden.

**Patentansprüche**

1. Verfahren zum Herstellen eines Rinnenofens mit mindestens einem Induktor und geschlossenen Rinnen, welche Seitenrinnen enthalten, die entweder durch Abrundungen am Boden ineinander übergehen oder über eine deutlich unterscheidbare Bodenrinne am Boden miteinander verbunden sind, wobei eventuell auch eine weitere zentrale Rinne vorhanden ist, die sich zwischen dem Herd und dem Bodenkanal erstreckt, welcher Rinnenofen für Aluminium, Kupfer oder andere Nicht-Ferrometalle oder -legierungen vorgesehen ist, dadurch gekennzeichnet, dass die Rinnenabmessungen so gewählt werden, dass die Höhe der Rinne ($H_R$) in einer Ebene, in der die Längsachse der Primärspule (3) liegt, mindestens $4 \times \delta$ beträgt, wobei $\delta$ die Eindringtiefe des in der Rinne induzierten Stroms in die Schmelze ist, und dass die Breite der Rinne ($B_R$) mindestens $6 \times \delta$ beträgt.

2. Verfahren nach Anspruch 1, dadurch gekennzeichnet, dass die einzelnen Seitenrinnen untereinander einen unterschiedlichen Querschnitt haben.

3. Verfahren nach Anspruch 1 oder 2, dadurch gekennzeichnet, dass die eine Seitenrinne eine grössere Mündungsfläche zum Herd hin hat als die andere.

## Claims

1. Method of manufacturing a channel furnace with at least one inductor and closed channels including lateral channels, which are either joined at the bottom by means of arcuate channel portions or are connected with each other via a clearly distinguishable bottom channel including possibly also a further central channel extending between the hearth and said bottom channel, the channel furnace being designed for aluminium, copper or other non-ferro-metals or non-ferro-alloys, characterized in that the dimensions of the channels are selected such that the height of the channel ($H_R$) in a plane in which the longitudinal axis of the primary coil (3) extends, is at least $4 \times \delta$, where $\delta$ is the depth of penetration into the melt of the current induced in the channel, and that the width ($B_R$) is at least $6 \times \delta$.

2. Method according to claim 1, characterized in that the different lateral channels have mutually different cross-sections.

3. Method according to any of claims 1 or 2, characterized in that the orifice area towards the hearth of one of the lateral channels is larger than that of the other lateral channel.

4. Method according to any of claims 2 or 3, characterized in that said cross-sections are differently dimensioned such as to generate a force which tends to drive the melt from the larger into the smaller channel orifice.

4. Verfahren nach Anspruch 2 oder 3, dadurch gekennzeichnet, dass die genannten Querschnitte derart unterschiedlich bemessen sind, dass eine Kraft auftritt, welche versucht, die Schmelze aus der grösseren in die kleinere Rinnenmündung zu treiben.

## Revendications

1. Procédé de fabrication d'un four à canal, comprenant un inducteur et des canaux fermés, lesquels comportent des canaux latéraux qui sont reliés l'un à l'autre par des arrondis dans le fond ou qui sont reliés entre eux par un canal de fond s'en distinguant nettement, un autre canal central étant présent éventuellement, et s'étendant entre le laboratoire et le canal de fond, ce four à canal étant prévu pour de l'aluminium, du cuivre ou d'autres métaux ou alliages non ferreux, caractérisé en ce qu'il consiste à donner au canal des dimensions telles que la hauteur ($H_R$) du canal, dans un plan par lequel passe l'axe longitudinal de la bobine primaire (3), est d'au moins $4 \times \delta$, $\delta$ étant la profondeur de pénétration dans la masse fondue du courant électrique induit dans le canal, et en ce que la largeur ($B_R$) du canal est d'au moins $6 \times \delta$.

2. Procédé suivant la revendication 1, caractérisé en ce que les canaux latéraux individuels ont des sections transversales différentes l'une de l'autre.

3. Procédé suivant la revendication 1 ou 2, caractérisé en ce que l'un des canaux latéraux débouche dans le laboratoire, suivant une surface plus grande que l'autre canal.

4. Procédé suivant la revendication 2 ou 3, caractérisé en ce qu'il consiste à donner aux sections transversales mentionnées des dimensions différentes telles qu'il se produise une force qui fait que la masse fondue est poussée de l'embouchure de canal la plus grande à l'embouchure de canal la plus petite.

0 077 750

FIG.1

FIG.2

FIG.3

7

FIG. 4

$B_R$

$H_R$

3

2

6

FIG. 5

13

$i_T$

$i_i$

14

$i_C$